# EUROPEAN PATENT APPLICATION

(11) **EP 1 857 586 A1**
(43) Date of publication of application: **21.11.2007**
(21) Application number: 06728614.6
(22) Date of filing: 03.03.2006
(51) Int. Cl.: D06M 13/292, D06M 13/52, D06M 101/32

(54) **FLAME-RETARDANT POLYESTER FIBER AND METHOD FOR PRODUCING SAME**

(30) Priority: 11.03.2005 JP 2005069317
(71) Applicant: DAIHACHI CHEMICAL INDUSTRY CO., LTD., Osaka-shi, Osaka 541-0046 (JP)
(72) Inventor: TANAKA, Yoshinori, Habikino-shi, Osaka, 5830852 (JP); MASUI, Yuki, Handa-shi, Aichi, 4750833 (JP)
(74) Representative: Sama, Daniele
(86) International application number: PCT/JP2006/304135
(87) International publication number: WO 2006/095658

(57) **Abstract**

A preparation process of flame-retardant polyester fibers, comprising the steps of: impregnating polyester fibers with a flame retardancy giving liquid containing a phosphorus compound as a flame-retarder represented by the formula (I): 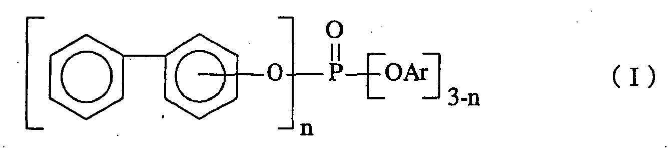 wherein Ar represents a phenyl or naphthyl group which may be substituted by C₁₋₄ alkyl groups, and n represents an integer 1 to 3; thermally treating the polyester fibers under normal or increased pressure after or at the same time as the impregnation treatment; and thereby giving flame retardancy to the polyester fibers.

## Description

### Technical Field

The present invention relates to flame-retardant polyester fibers obtained by fixing a non-halogen organic phosphorus compound to fibers by an after-treatment and being excellent in fastness to light, fastness to rubbing, flame retardancy, heat resistance, hydrolysis resistance and washing durability, and to a preparation process thereof.

### Background art

Polyester fibers are utilized in various fields including clothes, interior goods, wadding, nonwoven fabrics, industrial materials and the like since they have excellent mechanical properties and processability. For example, polyester fiber products are used as materials of interior goods in hotels, hospitals, movie theaters and the like. However, since polyester fiber products are flammable, there are strict regulations provided under the Fire Defense Law for the above-described uses to minimize damages due to fire caused by matches, cigarettes or the like. As awareness of disaster prevention has increased in recent years, development of polyester fiber products having flame retardancy has been desired in order to create highly safe and comfortable life environment.

As flame-retarders for polyester fibers, halogen compounds typified by hexabromocyclododecane (HBCD) are mainly used. Recently, however, there has been a concern about environmentally burdening substances such as hydrogen halogenide, which are generated when a product given flame retardancy burns, and the use of halogen compounds tends to be avoided. Accordingly, there has been active research carried out on phosphorus compounds as frame-retarders for polyester fibers.

The specification of UK Patent No. 1156588 (Patent Document 1) and the specification of US Patent No. 3,597,242 (Patent Document 2) each discloses a technique for giving flame retardancy to fibers with the use of a compound (A) represented by the following formula as a flame-retarder while spinning viscose rayon fibers and cellulose acetate fibers.

This compound (A) is included in phosphorus compounds 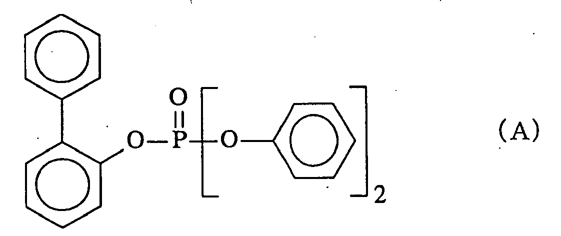 represented by the general formula (I) of the present invention.

However, the flame retardancy to be given by the technique described in these patent documents is not directed to polyester fibers, and the process for giving the flame retardancy is different from that of the present invention.

Japanese Unexamined Patent Publication No. SHO 61(1986)-197653 (Patent Document 3) discloses a technique for giving flame retardancy to resin by mixing the above-mentioned compound (A) as a flame-retarder into polyphenylene ether (PPE) resin.

However, the flame retardancy to be given by the technique described in this publication is not directed to polyester fibers, and the process for giving the flame retardancy is different from that of the present invention. In addition, the publication does not describe or suggest anything about flame retardancy to be given to polyester fibers.

On the other hand, the specification of US Patent No. 3,703,495 (Patent Document 4) discloses a technique for improving resin's low fluidity by mixing the above-mentioned compound (A) into a kind of polyester, that is, polyarylate resin.

However, the technique described in the patent document does not describe or suggest anything about flame retardancy to be given to polyester fibers.

Current mainstream processes for giving flame retardancy to polyester fibers are disclosed, for example, in Japanese Unexamined Patent Publication No. 2001-254268 (Patent Document 5). The process disclosed in this publication constitutes a technique for giving flame retardancy to polyester fibers by a so-called treatment in the same bath where giving of flame retaradancy and dyeing are performed at the same time with the use of a dye and a condensed phosphorus compound consisting only of an aromatic skeleton as a flame-retarder.

Treated with the phosphorus compound and the dye described in the publication, however, the obtained polyester fibers tend to lose the dye easily and have poorer fastness to wear, since the compatibility between the phosphorus compound and the dye used for the treatment is too high. Therefore, polyester fibers dyed in deep color cannot maintain the given flame retardancy and color over a long period of time. In addition, such polyester fibers are too poor in washing durability to maintain the initial flame retardancy and color.
Patent Document 1: Specification of UK Patent No. 1156588
Patent Document 2: Specification of US Patent No. 3,597,242
Patent Document 3: Japanese Unexamined Patent Publication No. SHO 61(1986)-197653
Patent Document 4: US Patent No. 3,703,495
Patent Document 5: Japanese Unexamined Patent Publication No. 2001-254268

### Disclosure of Invention

### Problems to be solved by the invention

Even if polyester fibers are treated for flame retardancy with the use of a phosphorus compound having a high phosphorus content as a flame-retarder, the phosphorus compound can be easily removable from the fibers, and maintained flame retardancy cannot be expected, if the phosphorus compound does not infiltrate deep in the fibers but attaches to the surface of the fibers. For example, when the polyester fibers are used for clothes or the like, the phosphorus compound is easily removed from the fibers by washing.

On the other hand, even if polyester fibers are treated for flame retardancy with the use of a phosphorus compound having a low phosphorus content as a flame-retarder, maintained flame retardancy can be expected, as long as the infiltration of the phosphorus compound into the fibers and the physical adhesion between the fibers and the phosphorus compound are great.

In giving flame retardancy to polyester fibers, therefore, a phosphorus compound is desired, which has a high phosphorus content and is not easily removable from the fibers, with the object of giving sufficient flame retardancy to the fibers and reducing the amount of flame-retarder to be used.

It is an object of the present invention to provide flame-retardant polyester fibers having stability to water and heat, and being capable of maintaining washing durability.

### Means for solving the problems

The present inventors, as a result of eager studies to solve the above problem, have found that flame-retardant polyester fibers being excellent in dyeing affinity, stability to light, less color transfer due to rubbing, stability to water and heat, and capable of maintaining washing durability, that is, flame-retardant polyester fibers being excellent in dyeing affinity, fastness to light, fastness to rubbing, hydrolysis resistance and heat resistance, and capable of maintaining various physical properties as fibers including washing durability can be obtained by an after-treatment with a certain non-halogen-containing phosphorus compound as a flame-retarder to achieve the present invention.

Thus, the present invention provides a preparation process of flame-retardant polyester fibers, comprising the steps of: impregnating polyester fibers with a flame retardancy giving liquid containing a phosphorus compound as a flame-retarder represented by the formula (I): 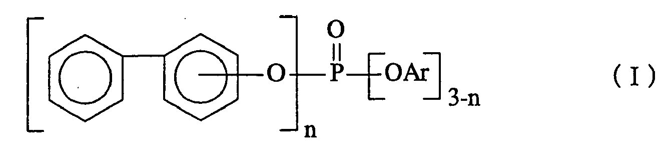 wherein Ar represents a phenyl or naphthyl group which may be substituted by C₁₋₄ alkyl groups, and n represents an integer 1 to 3; thermally treating the polyester fibers under normal or increased pressure after or at the same time as the impregnation treatment; and thereby giving flame retardancy to the polyester fibers.

The present invention also provides flame-retardant polyester fibers obtained by the above-described preparation process.

### Effect of the invention

In accordance with the present invention, the phosphorus compound (I) does not contain halogen which causes generation of harmful halogenated gas when burning, and can give excellent flame retardancy to polyester fibers while various physical properties as fibers including fastness to light, fastness to rubbing and washing durability are maintained.

Therefore, the present invention can provide flame-retardant polyester fibers having stability to light, rubbing, water and heat, and capability of maintaining washing durability.

### Best Mode for Carrying Out the Invention

The flame-retardant polyester fibers according to the present invention are obtained by fixing a non-halogen-containing organic phosphorus compound represented by the formula (I) (hereinafter abbreviated as "phosphorus compound (I)") to polyester fibers by an after-treatment.

Examples of the "C₁₋₄ alkyl groups" which may be present as a substituent for the phenyl and naphthyl groups represented by Ar in the formula (I) include straight alkyl groups such as methyl, ethyl, n-propyl, and n-butyl, and branched alkyl groups such as iso-propyl, isobutyl, sec-butyl and tert-butyl.

Hereinafter, examples of the phosphorus compound (I) which is used in the present invention will be shown; however, the scope of the present invention is not limited by these compounds:
2-biphenylyl diphenylphosphate, 4-biphenylyl diphenylphosphate, di(2-biphenylyl)phenylphosphate, di(4-biphenylyl)phenylphosphate, tri(2-biphenylyl)phosphate; tri(4-biphenylyl)phosphate,
2-biphenylyl dicresylphosphate, 4-biphenylyl dicresylphosphate, di(2-biphenylyl)cresylphosphate, di(4-biphenylyl)cresylphosphate,
2-biphenylyl dixylylphosphate, 4-biphenylyl dixylylphosphate, di(2-biphenylyl)xylylphosphate, di(4-biphenylyl)xylylphosphate,
(2-biphenylyl)di(ethylphenyl)phosphate, (4-biphenylyl)di(ethylphenyl)phosphate, di(2-biphenylyl)ethylphenylphosphate, di(4-biphenylyl)ethylphenylphosphate,
(2-biphenylyl)di(n-propylpheyl)phosphate, (4-biphenylyl)di(n-propylpheyl)phosphate, di(2-biphenylyl)n-propyl pheylphosphate, di(4-biphenylyl)n-propyl pheylphosphate,
(2-biphenylyl)di(isopropylphenyl)phosphate, (4-biphenylyl)di(isopropylphenyl)phosphate, di(2-biphenylyl)isopropyl phenylphosphate, di(4-biphenylyl)isopropyl phenylphosphate,
(2-biphenylyl)di(n-butylphenyl)phosphate, (4-biphenylyl)di(n-butylphenyl)phosphate, di(2-biphenylyl)n-butyl phenylphosphate, di(4-biphenylyl)n-butyl phenylphosphate,
(2-biphenylyl)di(isobutylphenyl)phosphate, (4-biphenylyl)di(isobutylphenyl)phosphate, di(2-biphenylyl)isobutyl phenylphosphate, di(4-biphenylyl)isobutyl phenylphosphate,
(2-biphenylyl)di(sec-butylphenyl)phosphate, (4-biphenylyl)di(sec-butylphenyl)phosphate, di(2-biphenylyl)sec-butyl phenylphosphate, di(4-biphenylyl)sec-butyl phenylphosphate,
(2-biphenylyl)di(tert-butylphenyl)phosphate, (4-biphenylyl)di(tert-butylphenyl)phosphate, di(2-biphenylyl)tert-butyl phenylphosphate, di(4-biphenylyl)tert-butyl phenylphosphate,
2-biphenylyl di(1-naphthyl)phosphate, 4-biphenylyl di(1-naphthyl)phosphate, di(2-biphenylyl)(1-naphthyl)phosphate, di(4-biphenylyl)(1-naphthyl)phosphate,
2-biphenylyl di(2-naphthyl)phosphate, 4-biphenylyl di(2-naphthyl)phosphate, di(2-biphenylyl)(2-naphthyl)phosphate, di(4-biphenylyl)(2-naphthyl)phosphate.

When used as a flame-retarder for polyester fibers, each of these phosphorus compounds (I) may be used alone or as a mixture of two or more kinds thereof. Such a mixture may be a mixture obtained by mixing highly pure compounds or a non-purified mixture obtained by synthesis.

Among the phosphorus compounds (I) of the present invention, compounds wherein n=1 and Ar=phenyl group ((2- or 4-biphenylyl)diphenylphosphate) can be obtained in high purity by, for example, the following preparation process:
(1) a process where 1 mole of 2- or 4-phenylphenol is reacted with respective to 1 mole of diphenyl phosphoruschloridate; or
(2) a process where 1.1 to 10 moles of phosphorus oxychloride is reacted with respective to 1 mole of 2- or 4-biphenylylphenol, nonreacted phosphorus oxychloride is removed, and then 2 moles of phenol is further reacted.
   Among the phosphorus compounds (I), compounds wherein n=2 and Ar=phenyl group (di(2- or 4-biphenylyl)phenylphosphate) can be obtained in high purity by, for example, the following preparation process:
(3) a process where 2 moles of 2- or 4-phenylphenol is reacted with respective to 1 mole of phenyl phosphorusdichloridate; or
(4) a process where 1.1 to 10 moles of phosphorus oxychloride is reacted with respective to 1 mole of phenol, nonreacted phosphorus oxychloride is removed, and then 2 moles of 2- or 4-phenylphenol is further reacted.
   Among the phosphorus compounds (I), compounds wherein n=3 (tri(2- or 4-biphenylyl)phosphate) can be obtained in high purity by, for example, the following preparation process:
(5) a process where over 3 moles of 2- or 4-phenylphenol is reacted with respective to 1 mole of phosphorus oxychloride, and nonreacted 2- or 4-phenylphenol is removed.

The phosphorus compounds (I) obtainable by the above-described reactions may be a mixture of components wherein n=0, n=1, n=2 and n=3. If the content of the phosphate wherein n=0 is high among these components, the boiling point lowers and the volatility increases, whereby the compound may vaporize during the process for giving flame retardancy to fibers and the working condition is worsened.

Therefore, it is preferred that the component wherein n=0 is contained in the phosphorus compound (I) of the present invention as little as possible, but may be contained in a small amount to the extent that it does not damage physical properties of the flame-retardant polyester fibers of the present invention.

The phosphorus compounds (I) obtainable by the above-described reactions are not particularly limited as long as they satisfy the definition of the formula (I), but compounds wherein Ar is a phenyl group and n is an integer 1 or 2 are preferred, among which compounds represented by the following formulas are particularly preferred:

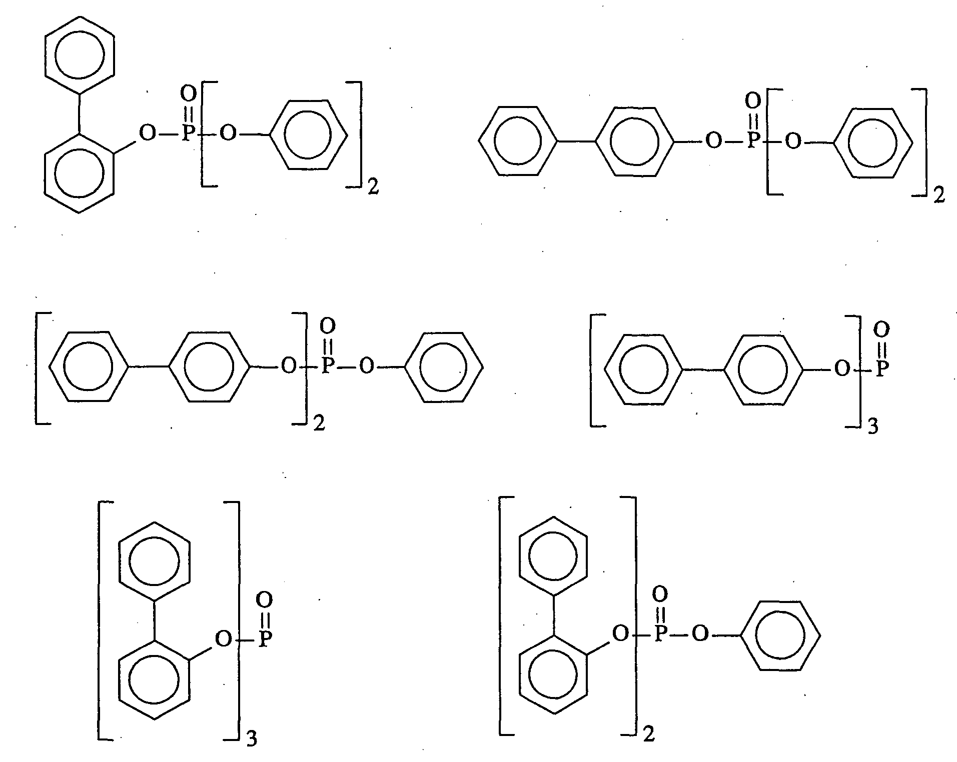

With regard to the polyester fibers, known ones may be used. Examples of the materials thereof include polyethylene terephthalate (PET), polytrimethylene terephthalate, polybutylene terephthalate, polyethylene naphthalate, polytrimethylene naphthalate, polybutylene naphthalate, isophthalic acid modified polyethylene terephthalate, isophthalic acid modified polybutylene terephthalate, among which polyethylene terephthalate is particularly preferred.

As the cross-sectional shape of each polyester fiber, any shape may be selected, that is, it may be either round or irregular, but round shape is particularly preferred.

The fineness of the polyester fibers is not particularly limited, and the phosphorus compound (I) may be applied to polyester fibers of an arbitrary fineness. Examples thereof include 0.001 to 3000 D (Denier: the weight in grams of 9000 meters of the fiber), preferably 0.01 to 200 D of polyester fibers.

The form of the polyester fibers is not particularly limited. Examples thereof include yarn, woven fabric, knitted fabric, nonwoven fabric, string, rope, yarn, tow, top, skein, knitted and woven fabric, and the like.

In addition, the polyester fibers may include other fibers. Examples of such polyester fibers include fabrics produced by blending, combined weaving or the like of polyester fibers and other fibers such as natural, recycled, semisynthetic or synthetic fibers.

The use of the polyester fibers is not particularly limited. For example, interior goods, clothes, industrial purposes, fishing nets and the like may be mentioned.

The fixing amount of the phosphorus compound (I) in the flame-retardant polyester fibers of the present invention is preferably 0.1 to 30 wt%, more preferably 0.3 to 10 wt%, still more preferably 0.5 to 5 wt% with respect to the flame-retardant polyester fibers.

It is not preferred that the fixing amount of the phosphorus compound (I) is less than 0.1 wt% because in such a case, it is difficult to give sufficient flame retardancy to the polyester fibers. It is not preferred that, on the other hand, the fixing amount of the phosphorus compound (I) exceeds 30 wt% because in such a case, it is difficult to obtain an effect of increase in flame retardancy according to the increased amount of the phosphorus compound (I), and instead, bleed-out is apt to occur on the surface of the fibers, allowing the flame-retarder to emerge on the surface of the fibers, which may cause the fibers to burn easily.

The flame-retardant polyester fibers of the present invention are obtained by fixing the phosphorus compound (I) to polyester fibers by an after-treatment.

More specifically, the preparation process of the flame-retardant polyester fibers according to the present invention comprises the steps of: impregnating polyester fibers with a flame retardancy giving liquid containing a phosphorus compound (I), that is, bringing a phosphorus compound into contact with polyester fibers (contact step); thermally treating the polyester fibers under normal or increased pressure after or at the same time as the impregnation treatment, that is, thermal treatment under normal or increased pressure (thermal treatment step); and thereby giving flame retardancy to the polyester fibers.

Thus, the preparation process of the flame-retardant polyester fibers according to the present invention is an after-treatment to give flame retardancy to polyester fibers, which is different from a pretreatment to give flame retardancy to polyester material itself that constitutes polyester fibers.

It is preferred that the flame retardancy giving liquid is usually an emulsion or a dispersion obtained by emulsifying or dispersing the phosphorus compound (I) into water, or a dispersion or a solution obtained by dispersing or dissolving the phosphorus compound (I) into an organic solvent.

The methods for dispersing the phosphorus compound (I) into water include known methods such as the one where the phosphorus compound (I), a surface-active agent, an organic solvent and, as necessary, a dispersion stabilizer are combined and agitated, and heated water is gradually added for emulsifying and dispersing the same.

The surface-active agent is not particularly limited, but known ones may be used. Examples thereof include anionic surface-active agents, nonionic surface-active agents and the like.

Examples of the anionic surface-active agents include carboxylate such as fatty acid soap; sulfate such as higher alcohol sulfate, higher alkyl polyalkylene glycol ether sulfate, sulfated oil, sulfated fatty acid ester, sulfated fatty acid, sulfated olefin; formalin condensation such as alkyl benzene sulfonate, alkyl naphthalene sulfonate, naphthalene sulfonate; sulfonate such as α-olefin sulfonate, paraffin sulfonate, Igepon T (a compound obtained by a reaction of oleic acid chloride and N-methyl taurate), diesterified sulfosuccinate; phosphate such as higher alcohol phosphate; and the like.

Examples of the nonionic surface-active agents include ones of the polyalkylene glycol type such as alkylene oxide adduct of higher alcohol, alkylene oxide adduct of alkylphenol, alkylene oxide adduct of styrenated alkylphenol, alkylene oxide adduct of styrenated phenol, alkylene oxide adduct of fatty acid, alkylene oxide adduct of polyalcohol fatty acid ester, alkylene oxide adduct of higher alkylamine, alkylene oxide adduct of fatty acid amide, alkylene oxide adduct of fat and oil, ethylene oxide adduct of polypropylene glycol; ones of the polyalcohol type such as fatty acid ester of glycerol, fatty acid ester of pentaerythritol, fatty acid ester of sorbitol and sorbitan, fatty acid ester of sucrose, alkyl ether of polyalcohol, fatty acid amide of alkanolamines; and the like.

Examples of the organic solvent include aromatic hydrocarbons such as toluene, xylene, alkylnaphthalene; alcohols such as methanol, ethanol, isopropanol, ethylene glycol; ketones such as acetone, methyl ethyl ketone; ethers such as dioxane, ethyl cellosolve; amides such as dimethylformamide; sulfoxides such as dimethyl sulfoxide; halogen hydrocarbons such as methylene chloride, chloroform; and the like. Each of these solvents may be used alone or as a mixture of two or more kinds thereof.

Examples of the dispersion stabilizer include polyvinyl alcohol, methylcellulose, hydroxymethylcellulose, xanthan gum, gelatinized starch and the like.

The blend amount of the dispersion stabilizer is 0.05 to 5 parts by weight, preferably 0.1 to 3 parts by weight with respect to 100 parts by weight of the flame retardancy giving liquid.

If the blend amount of the dispersion stabilizer is too small, the phosphorus compound (I) is prone to aggregation and sedimentation. On the other hand, if the blend amount of the dispersion stabilizer is too large, the viscosity of the dispersion increases. As a result, the phosphorus compound (I) becomes difficult to infiltrate deep in the polyester fibers, which makes it difficult to give flame retardancy to the polyester fibers.

It is preferred that the flame retardancy giving liquid contains a carrier (swelling agent). The carrier means an agent which swells the polyester fibers to facilitate the phosphorus compound (I) fixing into the molecular array of the polyester fibers sufficiently.

As such a carrier, known dyeing aids (carriers) used in carrier dyeing may be used. Examples thereof include, chlorobenzene compounds, aromatic ester compounds, methylnaphthalene compounds, diphenyl compounds, benzoate compounds, orthophenylphenol compounds and the like. Each of these compounds may be used alone or as a mixture of two or more kinds thereof.

The blend amount of the carrier is 0.1 to 10% o.w.f. (on the weight of fiber), preferably 1.0 to 5.0% o.w.f. with respect to the weight of the polyester fibers to be treated.

If the blend amount of the carrier is too small, the fixation of the phosphorus compound (I) to the polyester fibers is not sufficiently facilitated and, as a result, it becomes difficult to give flame retardancy to the polyester fibers. On the other hand, if the blend amount of the carrier is too large, the carrier is difficult to be emulsified or dispersed in the flame retardancy giving liquid.

In order to emulsify or disperse the carrier in the flame retardancy giving liquid sufficiently, sulfated castor oil, alkyl benzene sulfonate, dialkyl sulfosuccinate, polyoxyethylane (POE) castor oil ether, POE alkylphenyl ether or the like may be arbitrarily added as a surface-active agent.

As explained above, it is preferred that the flame retardancy giving liquid of the present invention contains at least another agent selected from a surface-active agent, a dispersion stabilizer, a carrier and a dye in addition to water and an organic solvent.

If the flame retardancy giving liquid is a water-based emulsion or dispersion, it may be prepared with the use of a known apparatus used for producing emulsified or dispersed flame retardancy giving liquid, for example, an emulsification machine and a dispersion machine such as a homogenizer, a colloid mill, a ball mill and a sand grinder.

If fastness to light or the like is required in addition to flame retardancy in the polyester fibers, an ultraviolet absorber and a known fiber treating agent such as of the benzotriazoles and of the benzophenones may be used together with the flame retardancy giving liquid to the extent that flame retardancy is not damaged.

Other than ultraviolet absorbers, examples of such fiber treating agents include antistatic agents, water and oil repellent agents, antifouling agents, hard finishers, texture conditioners, softeners, antibacterial agents, water absorbing agents, antislip agents and the like.

These fiber treating agents may be blended with the above-mentioned flame retardancy giving liquid to provide their functions together with flame retardancy, or may be preliminarily attached or absorbed to the polyester fibers.

Since polyester fibers are often dyed for practical use, the flame-retardant polyester fibers of the present invention may contain a dye. In the present invention, preliminary dyed polyester fibers may be given flame retardancy with the use of the phosphorus compound (I), or non-dyed polyester fibers may be given flame retardancy and dyed with the use of the phosphorus compound (I) and a dye at the same time or separately.

Processes for treating polyester fibers for flame retardancy with the use of the above-mentioned flame retardancy giving liquid will be described in detail.

### Process 1

In Process 1, the impregnation treatment is a spray or pad treatment, and the thermal treatment is performed at a temperature of 100 to 220 °C, preferably 160 to 190 °C, under normal pressure for several tens of seconds to several minutes.

A drying treatment may be performed at a point of time after the impregnation treatment and before the thermal treatment. However, it is preferred that the impregnation treatment and the thermal treatment are performed at the same time. The drying step is for preliminary removing the solvent and the like in the flame retardancy giving liquid impregnated in the polyester fibers.

As such a process, known ones may be applied. Examples thereof include dry-heat methods, wet-heat methods and the like, that is, the spraying-drying-curing method, the padding-drying-steaming method, the padding-steaming method, the padding-drying-curing method and the like may be mentioned.

It is not preferred that the temperature for the thermal treatment is too low because in such a case, the non-crystallized region in the molecules of the polyester fibers is difficult to relax or swell enough to accept the molecules of the phosphorus compound (I) present in the flame retardancy giving liquid and, as a result, it is difficult to give sufficient flame retardancy to the polyester fibers. It is not preferred that, on the other hand, the temperature for the thermal treatment is too high because in such a case, the polyester fibers themselves may have decreased fiber strength or may be thermally denatured, though the fixation of the phosphorus compound (I) to the polyester fibers can be securer and the outcome varies according to the heating condition.

Thermally treated within the above preferred temperature range, the phosphorus compound (I) present in the flame retardancy giving liquid fixes to the non-crystallized region in the molecules of the polyester fibers in stable condition and in larger amount even under normal pressure. Therefore, according to Process 1, it is possible to give sufficient flame retardancy and washing durability to polyester fibers.

### Process 2

In Process 2, the impregnation treatment is performed by soaking the polyester fibers in the flame retardant giving liquid, and the thermal treatment is performed at the same time as the impregnation treatment under a condition of high temperature and normal pressure or a condition of high temperature and increased pressure at a temperature of 90 to 150 °C and under a pressure of normal to 0.4 MPa, preferably under a condition of high temperature and increased pressure at a temperature of 110 to 140 °C and under a pressure of 0.05 to 0.3 MPa for several minutes to several tens of minutes.

For such a process, known apparatuses may be used. Examples thereof include package dyeing machines such as a liquid-flow dyeing machine, a beam dyeing machine and a cheese dyeing machine.

It is not preferred that the temperature for the thermal treatment is too low because in such a case, the non-crystallized region in the molecules of the polyester fibers is difficult to relax or swell enough to accept the molecules of the phosphorus compound (I) present in the flame retardancy giving liquid and, as a result, it is difficult to give sufficient flame retardancy to the polyester fibers. It is not preferred that, on the other hand, the temperature for the thermal treatment is too high because in such a case, the polyester fibers themselves may have decreased fiber strength or may be thermally denatured, though the fixation of the phosphorus compound (I) to the polyester fibers can be securer and the outcome varies according to the heating condition.

Thermally treated within the above preferred temperature range, as in the case of Process 1, the phosphorus compound (I) present in the flame retardancy giving liquid fixes to the non-crystallized region in the molecules of the polyester fibers in stable condition and in larger amount. Therefore, according to Process 2, it is possible to give sufficient flame retardancy and washing durability to polyester fibers. The flame retardancy giving liquid may be preliminary heated so as to be within the above preferred temperature range before the polyester fibers are soaked in the flame retardancy giving liquid.

### Process 3

In Process 3, the same step as in Process 2 is followed, but the flame retardancy giving liquid contains a carrier and the thermal treatment is performed under a condition of high temperature and normal pressure or a condition of hig h temperature and increased pressure at a temperature of 80 to 130 °C and under a pressure of normal to 0.2 MPa for several minutes to several tens of minutes. , comprising the step of soaking for several minutes to several tens of minutes.

In Process 3, the carrier emulsified or dispersed in the flame retardancy giving liquid is absorbed in the polyester fibers, thereby facilitating the phosphorus compound (I) fixing into the molecular array of the polyester fibers. As a result, the phosphorus compound (I) can be fixed to the inside of the polyester fibers in stable condition and in sufficient amount to exert an effect of flame retardancy even if the thermal treatment is performed under a more moderate condition than Process 2.

In addition, heat-related impacts on the polyester fibers in the thermal treatment step such as heat load and heat history are alleviated because of such a moderate condition for the thermal treatment. Therefore, decrease in the strength and heat denaturation of the polyester fibers in the thermal treatment step can be prevented sufficiently.

As in the case of Process 2, the flame retardancy giving liquid may be preliminary heated so as to be within the above preferred temperature range before the polyester fibers are soaked in the flame retardancy giving liquid with the carrier blended therein.

The timing to fix the phosphorus compound (I) present in the flame retardancy giving liquid to the polyester fibers by the above-described treatments may be before dyeing of the polyester fibers, at the same time as the dyeing or after the dyeing, particularly preferably at the same time as the dyeing in view of reduction of the number of steps and workloads to improve working efficiency.

In addition, it is preferred to perform a soaping treatment on the polyester fibers by a known method after the thermal treatment in the above-described processes to remove the phosphorus compound (I) not fixing to the polyester fibers securely but attaching to the surface of the polyester fibers gently (loosely).

As a cleaning agent used in the soaping treatment, normal anionic, nonionic and ampholytic surface-active agents and cleaning materials with these agents blended therein may be mentioned.

If washing durability required for the polyester fibers is not high level, the phosphorus compound (I) present in the flame retardancy giving liquid does not need to be fixed to the surface of the polyester fibers securely, that is, it is sufficient that the phosphorus compound (I) attaches to the surface of the fibers loosely. In this case, the thermal treatment may be substantially skipped. Flame retardancy can be given to polyester fibers even if the phosphorus compound (I) just attaches to the surface of the polyester fibers loosely.

### Examples

The present invention will be explained in detail by way of the following Synthesis Examples, Examples and Comparative Examples, which should not be construed to limit the scope of the invention.

### Synthesis Example 1 (synthesis of phosphorus compound 1)

Into a one-liter four-necked flask provided with a stirrer, a condenser and a thermometer, 170.0 g (1.0 mole) of 2-phenylphenol, 307.0 g (2.0 moles) of phosphorus oxychloride and 0.9 g of anhydrous magnesium chloride were fed. This mixed solution was heated for 2 hours to raise the temperature up to 120 °C under stirring in nitrogen atmosphere, and then stirred at the same temperature (120 °C) for 1 hour. Subsequently, depressurization was started at the same temperature (120 °C) and excess phosphorus oxychloride was recovered until the pressure reached about 1.3 kPa. The reaction mixture was cooled to room temperature, and 188.0 g (2.0 moles) of phenol and 30 g of toluene were further added. Then, it was heated for 2 hours to raise the temperature up to 150 °C under stirring in nitrogen atmosphere, and then reacted at the same temperature (150 °C) under reduced pressure (about 6.5 kPa) for 2 hours. After completion of the reaction, the reaction mixture was cooled to 80 °C and the pressure was returned to normal with the use of nitrogen. Then, the reaction mixture was washed with a 3.5% hydrochloric acid and a 1% sodium hydroxide aqueous solution successively at the same temperature (80 °C), and finally rinsed with water. Further, steam distillation was carried out at 150 °C under decreased pressure (about 2.7 kPa) to remove low-boiling components from the reaction product, thereby obtaining 392.0 g of transparent and colorless liquid. On the assumption that all the liquid was the target compound, the crude yield was 97.5%.

The composition of the obtained product was measured by liquid chromatography.

| | | |
|---|---|---|
| Composition: | 2-biphenylyl diphenylphosphate | 94% |
| | di(2-biphenylyl)phenylphosphate | 5% |
| | triphenylphosphate | 1% |
| | tri((2-biphenylyl)phosphate | 0% |

The phosphorus content of the obtained product was also measured:
Phosphorus content: 7.7%

### Synthesis Example 2 (synthesis of phosphorus compound 2)

383.9 g of a white solid substance was obtained in the same manner as in Synthesis Example 1 except that 170.0 g (1.0 mole) of 4-phenylphenol was used instead of 170.0 g (1.0 mole) of 2-phenylphenol. On the assumption that all the solid substance was the target compound, the crude yield was 95.5%.

The composition and the phosphorus content of the obtained product were measured in the same manner as in Synthesis Example 1. In addition, the melting point thereof was also measured.

| | | |
|---|---|---|
| Composition: | 4-biphenylyl diphenylphosphate | 91% |
| | di(4-biphenylyl)phenylphosphate | 7% |
| | triphenylphosphate | 2% |
| | tri(4-biphenylyl)phosphate | 0% |

Phosphorus content: 7.6%
Melting point: 61 to 63 °C

The followings are the ingredients of the polyester fibers which were used in the Examples and the Comparative Examples:
(a) Phosphorus compounds

| | |
|---|---|
| Phosphorus compound 1: | (see Synthesis Example 1) |
| Phosphorus compound 2: | (see Synthesis Example 2) |
| Phosphorus compound 3: | triphenylphosphate (trade name: TPP, produced by DAIHACHI CHEMICAL INDUSTRY CO., LTD) melting point: 49 to 50 °C |
| Phosphorus compound 4: | condensed phosphoric ester (see the following formula) (trade name: CR-733S, produced by DAIHACHI CHEMICAL INDUSTRY CO., LTD) liquid (25 °C) |

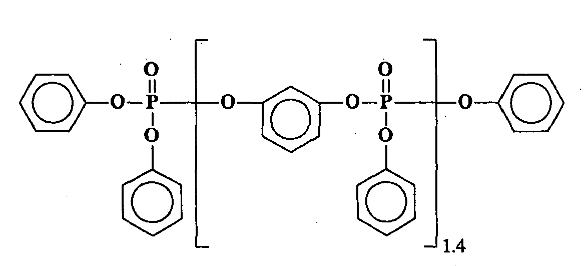

wherein 1.4 represents an average degree of condensation.
(b) Polyester fibers
Polyester-fiber fabric made of 100% polyethylene terephthalate (METSUKE: 250g/m², Polyester Tropical produced by TEIJIN LIMITED)
Fabric (1): 0.42 mm in thickness
Fabric (2): 0.24 mm in thickness

Flame retardancy giving liquids to be used to treat polyester fibers for flame retardancy were prepared:
(1) Preparation of flame retardancy giving liquid 1
   10 g of the phosphorus compound 1 and 1.5 g of a dispersion stabilizer, that is, trade name: Dis per N-700 produced by Meisei Chemical Works, LTD. were mixed and about 20 g of water was added thereto drops by drops, while the water and the obtained mixture were blended repeatedly, thereby obtaining pasty mixture: While the paste was stirred with a high-speed stirrer, about 80 g of water was further added little by little, thereby obtaining the flame retardancy giving liquid 1 in the form of white dispersion.
(2) Preparation of flame retardancy giving liquid 2
   5 g of the phosphorus compound 2 and 0.5 g of a dispersion stabilizer, that is, trade name: Alcaseagum produced by Hakuto Co., Ltd. were mixed in an agate mortar to obtain their particles in smaller diameter. Then, about 20 g of water was added thereto drops by drops, while the water and the obtained mixture were blended repeatedly, thereby obtaining pasty mixture. While the paste was stirred with a high-speed stirrer, about 80 g of water was further added little by little, thereby obtaining the flame retardancy giving liquid 2 in the form of white dispersion.
(3) Preparation of flame retardancy giving liquid 3
   The flame retardancy giving liquid 3 in the form of white dispersion was obtained in the same manner as in the preparation of the flame reterdancy giving liquid 2 except that the phosphorus compound 3 was used instead of the phosphorus compound 2.
(4) Preparation of flame retardancy giving liquid 4
   The flame retardancy giving liquid 4 in the form of white dispersion was obtained in the same manner as in the preparation of the flame reterdancy giving liquid 1 except that the phosphorus compound 4 was used instead of the phosphorus compound 1.

### Treatment Method 1 (Examples 1 to 4 and Comparative Examples 1 to 4)

The polyester-fiber fabric (1) was treated for flame retardancy with the use of the prepared flame retardancy giving liquids 1 to 2 and flame retardancy giving liquids 3 to 4 (Examples 1 to 2 and Comparative Examples 1 to 2).

Similarly, the polyester-fiber fabric (2) was treated for flame retardancy with the use of the prepared flame retardancy giving liquids 1 to 2 and flame retardancy giving liquids 3 to 4 (Examples 3 to 4 and Comparative Examples 3 to 4).

Into a dyebath of 4% o.w.f. of a dispersive dye (Dianix Blue U-SE produced by Mitsubishi Chemical Industries Ltd.), the flame retardancy giving liquid was added so that the concentration came to 8% o.w.f.. In the obtained bath, the polyester-fiber fabric was treated in a bath ratio of 1:30 at 130 °C for 60 minutes with the use of a MINI-COLOR testing machine (produced by TEXAMCo. LTD.), reduction-cleaned at 70 °C for 20 minutes, washed in hot water, dried, and then thermally treated at 150 °C for 3 minutes.

The polyester-fiber fabrics (1) and (2) treated for flame retardancy were evaluated in the following procedures:

### (1) Dye exhaustion test

For facilitating the disintegration in the subsequent step, a sample of the polyester-fiber fabric just finished with the treatment was preliminary cut into pieces of 2 mm cube, and about 1 g of these were precisely weighted out to be put in a beaked Erlenmeyer flask. Then, 5 ml of concentrated sulfuric acid, 25 ml of concentrated nitric acid and 3 ml of 70% perchloric acid were added into the Erlenmeyer flask. The Erlenmeyer flask was then lidded with a watch glass and heated until the mixed solution measured 5 to 10 ml and produced white smoke, thereby disintegrating the sample. Subsequently, the mixed solution was cooled down, transferred into a 250 ml measuring flask and diluted by adding distilled water up to the marked line of the measuring flask. 10 ml of the obtained solution was put into a 100 ml measuring flask and diluted by adding 10 ml of nitric acid (concentrated nitric acid: water = 1: 2 by volume), 5 ml of 0.5% ammonium vanadate solution and 10 ml of 5.0% ammonium molybdate solution, and adding distilled water up to the marked line of the measuring flask. In turn, the obtained solution was shaken up and left untouched about 30 minutes. The absorbancy of the obtained solution (colored liquid) was measured with a spectrophotometer (UVmini-1240 produced by Shimazu Corporation) at 440 nm of wavelength and compared with the absorbancy of a colored liquid obtained from a sample which was not treated for flame retardancy as a blank value.

The obtained absorbancy and the absorbancy of a standard phosphorus solution were compared to calculate the proportion of phosphorus to the sample (P%), thereby determining the amount of the flame-retarder which was fixed to the sample on the assumption that all the phosphorus was derived from the flame-retarder. The fabric (1) was used for the testing. The result is shown in Table 1.

### (2) Flame retardancy test

The flameproof performance test was carried out according to the D method of JIS L 1091 on the polyester-fiber fabrics treated for flame retardancy, that is, one just finished with the treatment, one washed 5 cycles according to the F-2 method of JIS L 1018, 8.58.4b)6.2; and one dry-cleaned (DLC) 5 cycles according to the E-2 method of JIS L 1018, 8.58.4b)5.2). The fabrics (1) and (2) having different thicknesses were used for the testing. The result is shown in Tables 1 and 2.

### (3) Dyeing affinity

The polyester-fiber fabric treated for flame retardancy which was just finished with the treatment was evaluated by visual observation and rated as good, fair or poor according to its dyeing affinity. The fabric (1) was used for the testing. The result is shown in Table 1.

The "dyeing affinity" is for evaluating how well the dyeing agent (a dye) stays on the material (fabric) and how close to the assumed color the dyed material is.

### (4) Texture

The polyester-fiber fabric treated for flame retardancy which was just finished with the treatment was evaluated by hand touching and rated as good, fair or bad. The fabric (1) was used for the testing. The result is shown in Table 1.

### (5) Smoking characteristic

Presence or absence of smoking derived from the flame-retarder is determined upon the thermal treatment (150 °C). Intense smoking was observed in the case of a low-molecular-weight flame-retarder. The fabric (1) was used for the testing. The result is shown in Table 1.

### (6) Fastness to light

The evaluation was carried out according to the JIS-L0842 color fastness test to ultraviolet carbon arc lamp light. The fabric (1) was used for the testing. The result is shown in Table 1.

**Table 1**

| Test results of Fabric (1) in Treatment Method 1 | | | | | | | | | | |
|---|---|---|---|---|---|---|---|---|---|---|
| Treatment Method 1 | Polyester fiber | Flame-retarder | Dye exhaustion (% o.w.f) | Flame retardancy | | | Dyeing affinity | Texture | Smoking characteristic | Fastness to light |
| | | | | D method/the number of flame contacts (times) | | | | | | |
| | | | Just finished w/ treatment | Just finished w/ treatment | After 5 cycles of washing | After DLC | | | | |
| Example 1 | Fabric (1) | Flame-retarder 1 | 3.0 | 5 | 5 | 4 | Good | Good | Absent | 4^{th} class |
| Example 2 | Fabric (1) | Flame-retarder 2 | 3.4 | 5 | 5 | 5 | Good | Good | Absent | 4^{th} class |
| Comparative Example 1 | Fabric (1) | Flame-retarder 3 | 3.7 | 4 | 4 | 4 | Good | Good | Present | 4^{th} class |
| Comparative Example 2 | Fabric (1) | Flame-retarder 4 | 1.5 | 4 | 3 | 3 | Poor | Good | Absent | 4^{th} class |

**Table 2**

| Test results of Fabric (2) in Treatment Method 1 | | | | | |
|---|---|---|---|---|---|
| Treatment Method 1 | Polyester fiber | Flame-retarder | Flame retardancy | | |
| | | | D method/the number of flame contacts (times) | | |
| | | | Just finished w/ treatment | After 5 cycles of washing | After DLC |
| Example 3 | Fabric (2) | Flame-retarder 1 | 4 | 3 | 3 |
| Example 4 | Fabric (2) | Flame-retarder 2 | 4 | 4 | 3 |
| Comparative Example 3 | Fabric (2) | Flame-retarder 3 | 3 | 2 | 2 |
| Comparative Example 4 | Fabric (2) | Flame-retarder 4 | 2 | 2 | 2 |

### Treatment Method 2 (Examples 5 to 8 and Comparative Examples 5 to 8)

The polyester-fiber fabric (1) was treated for flame retardancy with the use of the prepared flame retardancy giving liquids 1 to 2 and flame retardancy giving liquids 3 to 4 (Examples 5 to 6 and Comparative Examples 5 to 6).

Similarly, the polyester-fiber fabric (2) was treated for flame retardancy with the use of the prepared flame retardancy giving liquids 1 to 2 and flame retardancy giving liquids 3 to 4 (Examples 7 to 8 and Comparative Examples 7 to 8).

The polyester-fiber fabric dyed with deep-color pigment was soaked in an aqueous dispersion containing the flame retardancy giving liquid conditioned at the concentration of 7.5% o.w.f., squeezed with a mangle so that the pickup came to 70 to 80%, dried at 110 °C for 3 minutes, thermally treated at 180 °C for 1 minute, and then washed in water and dried.

The polyester fibers treated for flame retardancy were evaluated in the same manner as in Examples 1 to 4 and Comparative Examples 1 to 4. The results are shown in Tables 3 and 4.

**Table 3**

| Test results of Fabric (1) in Treatment Method 2 | | | | | | | | | | |
|---|---|---|---|---|---|---|---|---|---|---|
| Treatment Method 2 | Polyester fiber | Flame-retarder | Dye exhaustion (% o.w.f) | Flame retardancy | | | Dyeing affinity | Texture | Smoking characteristic | Fastness to light |
| | | | | D method/the number of flame contacts (times) | | | | | | |
| | | | Just finished w/ treatment | Just finished w/ treatment | After 5 cycles of washing | After DLC | | | | |
| Example 5 | Fabric (1) | Flame-retarder 1 | 2.5 | 5 | 4 | 4 | Good | Good | Absent | 4^{th} class |
| Example 6 | Fabric (1) | Flame-retarder 2 | 3.0 | 5 | 4 | 4 | Good | Good | Absent | 4^{th} class |
| Comparative Example 5 | Fabric (1) | Flame-retarder 3 | 2.9 | 3 | 4 | 4 | Good | Good | Present | 4^{th} class |
| Comparative Example 6 | Fabric (1) | Flame-retarder 4 | 0.9 | 3 | 3 | 3 | Poor | Good | Absent | 4^{th} class |

**Table 4**

| Test results of Fabric (2) in Treatment Method 2 | | | | | |
|---|---|---|---|---|---|
| Treatment Method 2 | Polyester fiber | Flame-retarder | Flame retardancy | | |
| | | | D method/the number of flame contacts (times) | | |
| | | | Just finished w/ treatment | After 5 cycles of washing | After DLC |
| Example 7 | Fabric (2) | Flame-retarder 1 | 3 | 3 | 3 |
| Example 8 | Fabric (2) | Flame-retarder 2 | 3 | 3 | 3 |
| Comparative Example 7 | Fabric (2) | Flame-retarder 3 | 2 | 3 | 2 |
| Comparative Example 8 | Fabric (2) | Flame-retarder 4 | 1 | 1 | 1 |

The hydrolysis resistance of the used phosphorus compounds 1 to 4 was evaluated as follows:

30 g of the phosphorus compound was put in a glass sampling bottle of 3 cm in aperture diameter, 4 cm in bottom diameter and 10 cm in height, and hydrolyzed with the use of a pressure cooker test machine (PC-362M produced by HIRAYAMA MANUFACTURING CORPORATION) at 121 °C under saturated water vapor pressure (about 0.2 MPa) for 6 hours.

Subsequently, the acid value (mgKOH/g) of the treated phosphorus compound was measured with the use of an acid value measuring instrument (TITRATOR COMTITE-101 produced by Hiranuma Sangyo Co., Ltd.).

The acid value of the non-hydrolyzed phosphorus compound was measured in the same way and compared with the acid value of the treated one. It is assumed that the more the acid value has increased, the more the phosphorus compound has been hydrolyzed. The result is shown in Table 5.

**Table 5**

| Hydrolysis resistance test | Acid value | | Increase in acid value |
|---|---|---|---|
| | Before testing | After testing | |
| Phosphorus compound 1 | 0.02 | 0.10 | 0.08 |
| Phosphorus compound 2 | 0.23 | 6.26 | 0.03 |
| Phosphorus compound 3 | 0.01 | 0.16 | 0.15 |
| Phosphorus compound 4 | 0.01 | 85.3 | 85.3 |

The results in Tables 1 to 5 indicate the followings:
(1) It is understood that the polyester-fiber fabrics in Examples 1 to 8 exhibit more excellent flame retardancy and have better physical properties as fibers including dyeing affinity and texture in any state, that is, before washing, after washing or after dry-cleaning compared to Comparative Examples 1 to 8 where the same treatment methods and the same polyester-fiber fabrics were used.
(2) It is understood that in the polyester-fiber fabrics which are treated with the flame retardancy giving liquids used in the Comparative Examples (Comparative Examples 1 to 8), smoke is produced during the treatment (Comparative Examples 1 and 5), dye exhaustion is poor, flame retardancy is poor and the attachment of the dye is impeded (Comparative Examples 2 and 6), since the phosphorus compounds used for preparing those flame retardancy giving liquids have low-molecular weight.
   That is, the flame retardancy giving liquids 1 and 2 exhibit better flame retardancy and variousphysical properties than the flame retardancy giving liquids 3 and 4. This indicates that the phosphorus compounds 1 and 2 have better flame retardancy and variousphysical properties than the phosphorus compounds 3 and 4.
(3) It is understood that the phosphorus compounds 1 and 2 have hydrolysis resistance which is equivalent to or higher than that of the phosphorus compounds 3 and 4.

From these results, it is understood that the preparation process of flame-retardant polyester fibers by fixing the flame-retarder for polyester fibers according to the present invention, that is, the phosphorus compound (I) to fibers by an after-treatment can be applied to both of the treatment where flame retardancy is given at the same time as dyeing and the treatment where flame retardancy is given to preliminary dyed fibers. Besides, it is understood that this process does not damage physical properties as fibers including dyeing affinity and texture, and adverse effects of the flame-retarder can be eliminated since the flame-retarder is a non-halogen compound.

## Claims

1. A preparation process of flame-retardant polyester fibers, comprising the steps of: impregnating polyester fibers with a flame retardancy giving liquid containing a phosphorus compound as a flame-retarder represented by the formula (I): 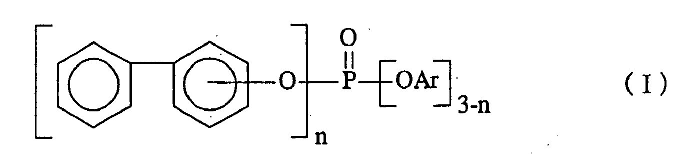 wherein Ar represents a phenyl or naphthyl group which may be substituted by C₁₋₄ alkyl groups, and n represents an integer 1 to 3; thermally treating the polyester fibers under normal or increased pressure after or at the same time as the impregnation treatment; and thereby giving flame retardancy to the polyester fibers.

2. The preparation process of claim 1, wherein the impregnation treatment is a spray or pad treatment and the thermal treatment is performed at a temperature of 100 to 220 °C under normal pressure.

3. The preparation process of claim 2, wherein a drying treatment is performed at a point of time after the impregnation treatment and before the thermal treatment.

4. The preparation process of claim 1, wherein the impregnation treatment is performed by soaking the polyester fibers in the flame retardant giving liquid and the thermal treatment is performed at the same time as the impregnation treatment under a condition of high temperature and normal pressure or a condition of high temperature and increased pressure at a temperature of 90 to 150 °C and under a pressure of normal to 0.4 MPa.

5. The preparation process of claim 4, wherein the flame retardancy giving liquid contains a carrier and the thermal treatment is performed under a condition of high temperature and normal pressure or a condition of high temperature and increased pressure at a temperature of 80 to 130 °C and under a pressure of normal to 0.2 MPa.

6. The preparation process of claim 1, wherein the flame retardancy giving liquid is an emulsion or a dispersion obtained by emulsifying or dispersing the phosphorus compound of the formula (I) into water, or a dispersion or a solution obtained by dispersing or dissolving the phosphorus compound of the formula (I) into an organic solvent.

7. The preparation process of claim 6, wherein the flame retardancy giving liquid contains at least another agent selected from a surface-active agent, a dispersion stabilizer, a carrier and a dye.

8. The preparation process of claim 1, wherein Ar is a phenyl group and n is an integer 1 or 2 in the formula (I).

9. The preparation process of claim 1, wherein the phosphorus compound of the formula (I) is selected from the following compounds:

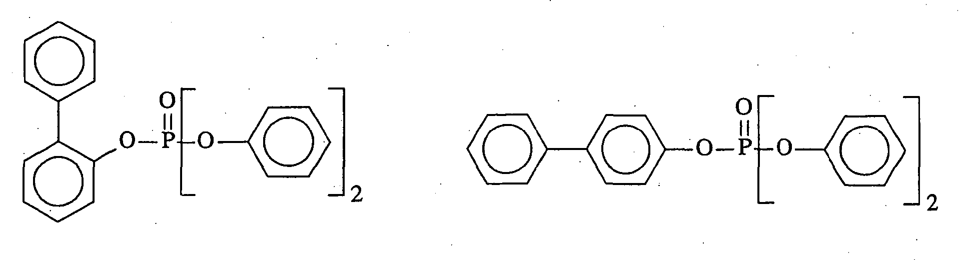

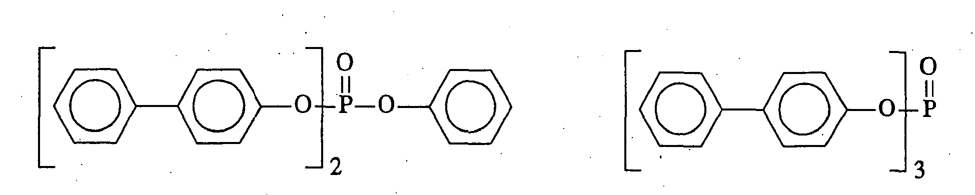

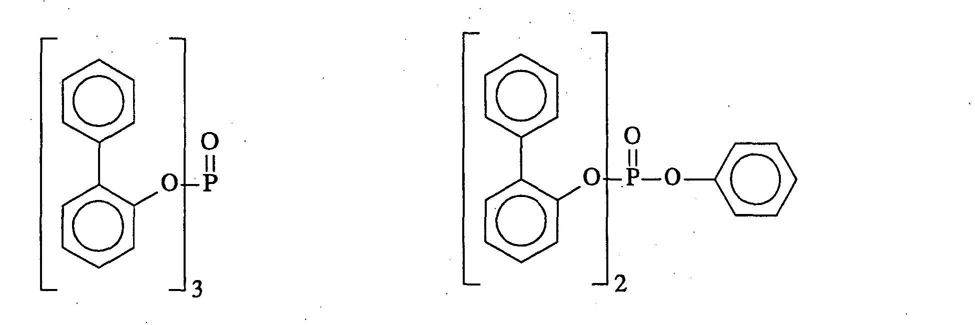

10. The preparation process of claim 1, wherein the polyester fibers are polyethylene terephthalate fibers:

11. The preparation process of claim 1, wherein the polyester fibers are in the form of yarn, woven fabric, knitted fabric, nonwoven fabric, string, rope, yarn, tow, top, skein or knitted and woven fabric.

12. Flame-retardant polyester fibers obtained by the preparation process of claim 1.

13. The flame-retardant polyester fibers of claim 12, wherein the fixing amount of the phosphorus compound of the formula (I) is 0.1 to 30 wt% with respect to the flame-retardant polyester fibers.
